# EUROPÄISCHE PATENTSCHRIFT

(11) **EP 3 287 641 B1**
(45) Veröffentlichungstag und Bekanntmachung des Hinweises auf die Patenterteilung: **09.12.2020**
(21) Anmeldenummer: 17183804.8
(22) Anmeldetag: 21.08.2017
(51) Int. Cl.: F04D 27/00, F24F 110/30, G01F 1/06, G01F 1/10

(54) **VERFAHREN ZUR VOLUMENSTROMREGELUNG EINES VENTILATORS**
METHOD FOR REGULATING THE MASSFLOW OF A VENTILATOR
PROCÉDÉ DE RÉGULATION DE DÉBIT D'UN VENTILATEUR

(30) Priorität: 23.08.2016 DE 102016115617
(43) Veröffentlichungstag der Anmeldung: 28.02.2018
(73) Patentinhaber: ebm-papst Mulfingen GmbH & Co. KG, 74673 Mulfingen (DE)
(72) Erfinder: HAAF, Oliver, 74635 Kupferzell (DE); HELI, Thomas, 74595 Langenburg (DE); GEBERT, Daniel, 74613 Öhringen (DE)
(74) Vertreter: Staeger & Sperling Partnerschaftsgesellschaft mbB

(56) Entgegenhaltungen:
- EP-A2- 1 197 244
- EP-A2- 1 850 013
- WO-A1-96/10733
- WO-A2-2013/052517
- GB-A- 2 049 925

## Beschreibung

Die Erfindung betrifft ein Verfahren zur Volumenstromregelung eines von einem drehzahlveränderlichen Antriebsmotor angetriebenen Ventilators.

In vielen Anwendungen der Luft- und Klimatechnik ist es notwendig, den geförderten Volumenstrom eines Gebläses bzw. Ventilators zu bestimmen bzw. konstant zu regeln. Darüber hinaus sind in derartigen Anwendungen die Anforderungen an ein möglichst geringes Ventilatorgeräusch hoch. Herkömmlicherweise wurden in der Luft- und Klimatechnik Trommelläufer-Ventilatoren eingesetzt, da sich diese auch unter gestörten Zuströmbedingungen durch ein gutes Geräuschverhalten auszeichnen. Die Volumenstrombestimmung ist bei Trommelläufer-Ventilatoren durch einen eindeutigen Zusammenhang zwischen Leistungsaufnahme und Volumenstrom bei konstanter Drehzahl möglich. Nachteilig ist jedoch der im Vergleich zu Radialventilatoren, insbesondere mit Gebläserädern mit rückwärts gekrümmten Schaufeln, relativ niedrige Wirkungsgrad.

Aufgrund gestiegener Effizienzanforderungen werden die Trommelläufer-Ventilatoren mehr und mehr von Radialventilatoren, ggf mit rückwärts gekrümmten Schaufeln, verdrängt. Bei diesen besteht jedoch kein eindeutiger Zusammenhang zwischen Leistungsaufnahme und Volumenstrom bei konstanter Drehzahl. Deshalb ist zur Bestimmung des geförderten Volumenstroms ein anderes Verfahren notwendig. Eine bekannte Lösung ist die Entnahme des statischen Drucks in der Einlaufdüse des Ventilators mit Hilfe einer Ringleitung. Mit diesem Verfahren lässt sich aus dem gemessenen statischen Druck direkt der Volumenstrom ermitteln. Typischerweise werden drei oder vier Druckentnahmestutzen über eine Leitung verbunden und mittels einer Schlauchleitung ein Drucksensor angeschlossen. Eine solche Schlauchleitung verursacht jedoch einen hohen Montageaufwand und mithin hohe Kosten. Ferner ist nachteilig, dass zwischen dem geförderten Volumenstrom und dem Wirkdruck ein quadratischer Zusammenhang besteht, was zu einer schlechten Messgenauigkeit bei kleinen Volumenströmen führt, da das Drucksignal kaum mehr messbar ist.

Stand der Technik im vorliegenden technischen Gebiet ist aus den Druckschriften EP 1 197 244 A2, WO 96/10733 A1, WO 2013/052517 A2 und der EP 1 850 013 A2 bekannt.

Der Erfindung liegt deshalb die Aufgabe zugrunde, ein Verfahren zur Volumenstromregelung eines Ventilators bereit zu stellen, mit dem der von dem Ventilator geförderte Volumenstrom bestimmbar und anpassbar ist.

Diese Aufgabe wird durch die Merkmalskombination gemäß Patentanspruch 1 gelöst.

Erfindungsgemäß wird ein Verfahren zur Volumenstromregelung eines von einem drehzahlveränderlichen Antriebsmotor angetriebenen Ventilators vorgeschlagen, das die folgenden Verfahrensschritte umfasst. Zunächst erfolgt die Bestimmung eines von einem Ventilator geförderten Volumenstromes (q_{V}), der abhängig ist von einer Ventilatorraddrehzahl (n_{V}), wobei in einem Ausblasabschnitt des Ventilators ein von dem Volumenstrom des Ventilators angetriebenes Flügelrad angeordnet ist, dessen Drehzahl (n_{F}) erfasst wird und als Referenzwert des Volumenstromes (q_{V}) des Ventilators dient. Die Drehzahl des Flügelrades ist theoretisch betrachtet linear zum geförderten Volumenstrom, jedoch kommt es insbesondere durch Drall in der Strömung und bei unterschiedlichen Betriebszuständen zu Abweichungen zwischen dem theoretisch linearen und dem tatsächlichen Drehzahlwert des Flügelrads. Das Flügelrad wird ausschließlich von dem durch das Ventilatorrad erzeugten Volumenstrom angetrieben.

Zum Ausgleich der Abweichungen wird erfindungsgemäß zusätzlich zumindest ein Ventilatorparameter erfasst, der einem Antriebsmotorparameter oder der Ventilatorraddrehzahl (n_{V}) entspricht. Über diesen weiteren Ventilatorparameter kann zusammen mit der erfassten Flügelraddrehzahl n_{F} als Referenzwert für den Volumenstrom auf den tatsächlichen Betriebszustand des Ventilators geschlossen werden.

Die Volumenstrombestimmungsgenauigkeit lässt sich dabei verbessern durch die Festlegung einer Korrekturfunktion (f) des Volumenstromes (q_{V}) in Abhängigkeit von der Drehzahl (n_{F}) des Flügelrades und der Ventilatorraddrehzahl (n_{V}), sodass gilt qᵥ= f (n_{F}, n_{V}). Zur Bestimmung des exakten Volumenstromes (q_{V}) erfolgt eine Berechnung des Volumenstromes (q_{V}) unter Nutzung der Korrekturfunktion (f).

Schließlich wird nach der Berechnung des Volumenstromes (q_{V}) die Ventilatorraddrehzahl (n_{V}) durch eine Drehzahlanpassung des Antriebsmotors zur Anpassung des berechneten Volumenstromes (q_{V}) auf einen festgelegten Sollwert des Volumenstromes (q_{V-soll}) verändert.

In einer Ausführung des Verfahrens erfolgt die Anpassung der Ventilatorraddrehzahl (n_{V}) auf den festgelegten Sollwert des Volumenstromes (q_{V-soll}) durch den Antriebsmotor derart, dass der geförderte Volumenstrom (q_{V}) des Ventilators auch bei einer sich verändernden Geräte- bzw. Anlagenkennlinie (Δp, q_{V}) des Ventilators konstant bleibt und dem festgelegten Sollwert des Volumenstromes (q_{V-soll}) entspricht.

Alternativ wird einer Ausführungsvariante als Antriebsmotorparameter der erfasste Aussteuergrad (auch "Tastgrad") des Antriebsmotors verwendet. Zudem können auch mehrere der vorstehend genannten Parameter gleichzeitig in die Korrekturfunktion einfließen, so dass gilt q_{V} = f (n_{F}, P, n_{V}, Aussteuergrad). Auch können Parameter wie die jeweilige Stromstärke des Antriebsmotors entlang der Anlagenkennlinie mit berücksichtigt werden, um den Volumenstrom so exakt wie möglich zu berechnen. Durch das erfindungsgemäße Verfahren können die Messabweichungen bei sich verändernder Anlagenkennlinie des Ventilators reduziert werden. Trotz ansaugseitiger und ausblasseitiger Störungen der Strömung des Ventilators kann eine hohe Messgenauigkeit des Volumenstromes sichergestellt werden. Dies gilt insbesondere auch bei kleinen Volumenströmen des Ventilators, d.h. bei Volumenströmen unterhalb von 10% des Maximalvolumenstromes.

Ferner wird in einer Weiterbildung des erfindungsgemäßen Verfahrens vorgesehen, dass der festgelegte Sollwert des Volumenstromes (q_{V-soll}) als Kennlinie in einem Speicher hinterlegt ist.

In einer Weiterbildung wird der unter Nutzung der Korrekturfunktion (f) berechnete Volumenstrom (q_{V}) in einem Speicher abgespeichert. Aus einer Vielzahl derartiger Werte des berechneten Volumenstromes (q_{V}) wird in einer Ausführung des Verfahrens ferner eine Kennlinie entwickelt, auf die im Störungsfall zurückgegriffen werden kann.

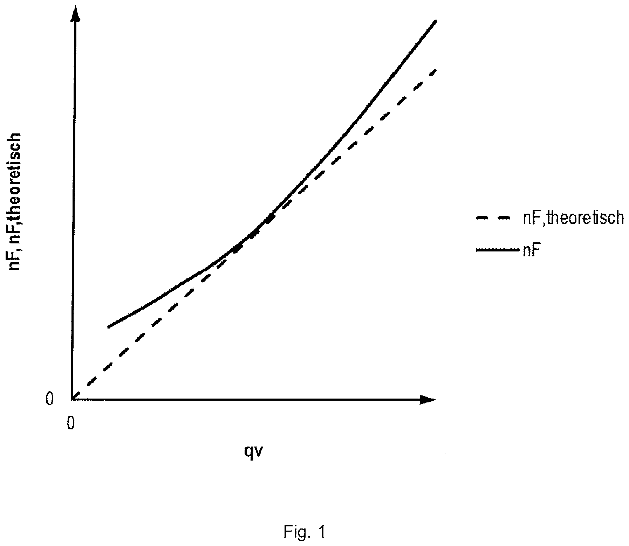

Es wird eine Figur 1 beigefügt, in der die Abweichung des Verlaufs der tatsächlichen Drehzahl n_{F} des Flügelrads bei unterschiedlichen Volumenströmen q_{V} von dem theoretisch linearen Verlauf n_{F,theoretisch} veranschaulicht wird. Über die vorstehend beschriebene Korrekturfunktion wird die Diskrepanz ausgeglichen und somit der tatsächliche Volumenstrom bestimmbar.

## Patentansprüche

1. Verfahren zur Volumenstromregelung eines von einem drehzahlveränderlichen Antriebsmotor angetriebenen Ventilators, umfassend die Schritte:
a. Bestimmung eines von einem Ventilator geförderten Volumenstromes (q_{V}), der abhängig ist von einer Ventilatorraddrehzahl (n_{V}), wobei in einem Ausblasabschnitt des Ventilators ein von dem Volumenstrom des Ventilators angetriebenes Flügelrad angeordnet ist, dessen Drehzahl (n_{F}) erfasst wird und als Referenzwert des Volumenstromes (q_{V}) des Ventilators dient,
b. Erfassung zumindest eines Ventilatorparameters, wobei der zumindest eine Ventilatorparameter die Ventilatorraddrehzahl (n_{V}) ist,
c. Festlegung einer Korrekturfunktion (f) des Volumenstromes (q_{V}) in Abhängigkeit von der Drehzahl (n_{F}) des Flügelrades und der Ventilatorraddrehzahl (n_{V}), so dass gilt q_{V} = f (n_{F}, n_{V}), wobei zur Bestimmung des Volumenstromes (q_{V}) eine Berechnung des Volumenstromes (q_{V}) unter Nutzung der Korrekturfunktion (f) erfolgt,
d. Anpassung der Ventilatorraddrehzahl (nv) durch den Antriebsmotor zur Anpassung des berechneten Volumenstromes (q_{V}) auf einen festgelegten Sollwert des Volumenstromes (q_{V-soll}).

2. Verfahren nach Anspruch 1, **dadurch gekennzeichnet, dass** die Anpassung der Ventilatorraddrehzahl (n_{V}) auf den festgelegten Sollwert des Volumenstromes (q_{V-soll}) durch den Antriebsmotor derart erfolgt, so dass der geförderte Volumenstrom (q_{V}) des Ventilators konstant bleibt.

3. Verfahren nach Anspruch 1 oder 2, **dadurch gekennzeichnet, dass** die Festlegung der Korrekturfunktion (f) des Volumenstromes (q_{V}) in Abhängigkeit des Antriebsmotorparameters erfolgt, wobei der Antriebsmotorparameter einer gemessenen abgegebenen Leistung (P) des Antriebsmotors entspricht, so dass gilt q_{V} = f(n_{F}, n_{V}, P).

4. Verfahren nach Anspruch 3, **dadurch gekennzeichnet, dass** der Antriebsmotorparameter einem erfassten Aussteuergrad des Antriebsmotors entspricht.

5. Verfahren nach einem der vorigen Ansprüche, **dadurch gekennzeichnet, dass** der festgelegte Sollwert des Volumenstromes (q_{V-soll}) als Kennlinie in einem Speicher hinterlegt ist.

6. Verfahren nach einem der vorigen Ansprüche, **dadurch gekennzeichnet, dass** der unter Nutzung der Korrekturfunktion (f) berechnete Volumenstrom (q_{V}) in einem Speicher abgespeichert wird.

7. Verfahren nach dem vorigen Anspruch, dass aus einer Vielzahl von Werten des berechneten Volumenstromes (q_{V}) eine Kennlinie entwickelt wird.

## Claims

1. Method for controlling the volume flow of a fan driven by a rotational speed variable drive motor, comprising the steps
a. Determination of a volume flow (q_{V}) conveyed by a fan, said volume flow (q_{V}) being dependent on a fan wheel rotational speed (n_{V}), wherein an impeller wheel driven by the volume flow of the fan is arranged in a blow-out section of the fan, wherein the rotational speed (n_{F}) of said impeller wheel is detected and serves as a reference value of the volume flow (q_{V}) of the fan,
b. Detection of at least one fan parameter, wherein the at least one fan parameter is the fan wheel rotational speed (n_{V}),
c. Definition of a correction function (f) for the volume flow (q_{V}) as a function of the rotational speed (n_{F}) of the impeller wheel and the fan wheel rotational speed (n_{V}), so that q_{V} = f (n_{F}, n_{V}) applies, wherein a calculation of the volume flow (qV) using the correction function (f) is carried out for determining the volume flow (q_{V}),
d. Adjustment of the fan wheel rotational speed (n_{V}) by the drive motor to adjust the calculated volume flow (q_{V}) to a fixed target value of volume flow (q_{V}-soll).

2. Method according to claim 1, **characterized in that** the adjustment of the fan wheel rotational speed (n_{V}) to the defined target value of the volume flow (q_{V}-soll) by the drive motor is carried out in such a way that the delivered volume flow (q_{V}) of the fan remains constant.

3. Method according to claim 1 or 2, **characterized in that** the definition of the correction function (f) of the volume flow (q_{V}) is carried out as a function of the drive motor parameter, wherein the drive motor parameter corresponds to a measured output power (P) of the drive motor, such that q_{V} = f(n_{F}, n_{V}, P) applies.

4. Method according to claim 3, **characterized in that** the drive motor parameter corresponds to a detected modulation degree of the drive motor.

5. Method according to one of the preceding claims, **characterized in that** the defined target value of the volume flow (q_{V}-soll) is stored as a characteristic curve in a memory.

6. Method according to one of the preceding claims, **characterized in that** the volume flow (q_{V}) calculated using the correction function (f) is stored in a memory.

7. Method according to the preceding claim, **characterized in that** a characteristic curve is developed from a plurality of values of the calculated volume flow (q_{V}).

## Revendications

1. Procédé de régulation du débit volumique d'un ventilateur entraîné par un moteur d'entraînement à vitesse variable, comprenant les étapes :
a de détermination d'un débit volumique (qv) fourni par un ventilateur, qui dépend d'une vitesse de roue de ventilateur (nv), dans lequel une roue entraînée par le débit volumique du ventilateur est disposée dans une section de refoulement du ventilateur, roue dont la vitesse (n_{F}) est enregistrée et sert de valeur de référence du débit volumique (qv) du ventilateur,
b. de détection d'au moins un paramètre de ventilateur, dans lequel l'au moins un paramètre de ventilateur est la vitesse de roue de ventilateur (n_{V}),
c. de définition d'une fonction de correction (f) du débit volumique (qv) en fonction de la vitesse (n_{F}) de la roue et de la vitesse de roue de ventilateur (n_{V}), de sorte que qv = f (n_{F}, n_{V}), dans lequel, pour déterminer le débit volumique (qv), on effectue un calcul du débit volumique (qv) à l'aide de la fonction de correction (f),
d. de réglage de la vitesse de roue de ventilateur (nv) par le moteur d'entraînement pour régler le débit volumique calculé (qv) selon une consigne spécifiée du débit volumique (q_{V-soll}).

2. Procédé selon la revendication 1, **caractérisé en ce que** le réglage de la vitesse de roue de ventilateur (nv) est effectué selon la consigne spécifiée du débit volumique (q_{V-soll}) par le moteur d'entraînement de sorte que le débit volumique (qv) fourni par le ventilateur reste constant.

3. Procédé selon la revendication 1 ou 2, **caractérisé en ce que** la fonction de correction (f) du débit volumique (qv) est définie en fonction du paramètre de moteur d'entraînement, dans lequel le paramètre de moteur d'entraînement correspond à une puissance fournie mesurée (P) du moteur d'entraînement, de sorte que l'on a qᵥ = f (n_{F}, n_{V}, P).

4. Procédé selon la revendication 3, **caractérisé en ce que** le paramètre de moteur d'entraînement correspond à un degré de modulation détecté du moteur d'entraînement.

5. Procédé selon l'une des revendications précédentes, **caractérisé en ce que** la consigne spécifiée du débit volumique (q_{V-soll}) est stockée en tant que courbe caractéristique dans une mémoire.

6. Procédé selon l'une des revendications précédentes, **caractérisé en ce que** le débit volumique (qv) calculé à l'aide de la fonction de correction (f) est enregistré dans une mémoire.

7. Procédé selon la revendication précédente, qu'une courbe caractéristique est développée à partir d'une pluralité de valeurs du débit volumique calculé (qv).
